# NEUE EUROPÄISCHE PATENTSCHRIFT

(11) **EP 0 202 345 B2**
(45) Veröffentlichungstag und Bekanntmachung des Hinweises auf die Entscheidung über den Einspruch: **11.12.1996**
(45) Hinweis auf die Patenterteilung: 31.03.1993
(21) Anmeldenummer: 85104668.0
(22) Anmeldetag: 17.04.1985
(51) Int. Cl.: C25F 3/04, H01G 9/04

(54) **Verfahren zur Herstellung einer Aluminiumfolie für Elektrolytkondensatoren und Elektrolytkondensator aus so hergestellten Aluminiumfolien**
Process for manufacturing an aluminium foil for electrolytic capacitors and electrolytic capacitors made of the foils so manufactured
Procédé de fabrication d'une feuille en aluminium pour condensateurs électrolytiques et condensateurs électrolytiques à partir de feuilles en aluminium ainsi fabriquées

(30) Priorität: 12.04.1985 EP 85104473
(43) Veröffentlichungstag der Anmeldung: 26.11.1986
(73) Patentinhaber: Salvadori, Luigi, I-20140 Mailand (IT)
(72) Erfinder: Salvadori, Luigi, I-20140 Mailand (IT)
(74) Vertreter: Keil, Rainer A., Dipl.-Phys. Dr.

(56) Entgegenhaltungen:
- EP-A- 0 133 714
- GB-A- 1 169 234
- JP-A- 5 484 259

## Beschreibung

Die Erfindung bezieht sich auf ein Verfahren zur Herstellung einer Aluminiumfolie für Elektrolytkondensatoren nach dem Oberbegriff des Patentanspruchs 1.

Ein derartiges Verfahren ist aus der DE-A-1 564 486 bekannt. Diese Ätzmethode gestattet es, in statischen Ätzbädern befriedigende Resultate zu erzielen. Wenn man aber das Ätzverfahren in einer Durchlauf-Ätzmaschine ausführen will, ergibt sich überraschenderweise, daß sich offenbar durch die dynamische Wirkung des Durchlaufbades der Ätzangriff unregelmäßig vollzieht. Die natürliche Oberfläche der Aluminiumfolie bietet im Durchlaufverfahren offensichtlich mehr oder weniger Widerstand für den Ätzangriff und die Ätzbedingungen sind in der Eintauchzone des Bades, insbesondere durch den vom Ätzen erzeugten Schaum, schlecht definiert.

Aus der EP-A-0 133 714 ist ein Verfahren zum elektrolytischen Ätzen von Aluminium-Katalysator-Folien bekannt, bei welchem als Hauptätzverfahren ein anodisches Ätzen unter Gleichstrom in einem statischen Ätzbad durchgeführt wird. Diesem Hauptätzverfahren ist ein Vorätzen ebenfalls in einem statischen Ätzbad unter Wechselstrom vorgeschaltet, bis eine bestimmte Menge an Aluminium abgetragen ist. Das Vorätzbad besteht aus einer Mischung aus HCl, H₃PO₄ und HNO₃. Durch diese Kombination einer Gleichstromätzung mit einer vorgeschalteten Wechselstromätzung jeweils vorgegebener Ätztiefe soll ein wirtschaftlicher Kompromiß zwischen befriedigender Kapazität und hinreichender Folienstärke erzielt werden können, damit die Folie mit hoher Geschwindigkeit aufgewickelt werden kann.

Aufgabe der vorliegenden Erfindung ist es, ein Verfahren der eingangs genannten Art so weiterzubilden, daß es zu höchstmöglicher und gleichmäßiger Aufrauhung, d.h. Kapazität pro Folienoberfläche bei guter mechanischer Stabilität der Folie in Durchlauf-Ätzbädern führt.

Diese Aufgabe wird erfindungsgemäß mit den Mitteln des kennzeichnenden Teils des Patentanspruchs 1 gelöst. Hierdurch werden die geschilderten, insbesondere bei Durchlauf-Ätzbädern auftretenden Schwierigkeiten überraschenderweise beseitigt bzw. erheblich verringert. Aufgrund der in dem Satinierungsbad unter den angegebenen Bedingungen vorgenommenen Vorätzung wird die Folie offenbar zu einer so gleichmäßigen Oberflächenbeschaffenheit gebracht, daß der nachfolgende Ätzangriff trotz einer Ausführung im Durchlaufverfahren weitaus gleichmäßiger erfolgt und die gewünschten elektrischen und mechanischen Werte problemlos erreicht werden können.

Eine bevorzugte Ausführungsform der Erfindung besteht darin, daß man die Folie in dem Satinierungsbad einem Satinierungsstrom mit einer Frequenz zwischen etwa 20 und 400 Hz und einem Arbeitszyklus (duty cycle) von mehr als 40 % vorzugsweise von etwa 50 %, unterwirft. Hierdurch ergibt sich, wie Erfahrungen gezeigt haben, eine besonders gute Gleichmäßigkeit der Folie als Vorbereitung zum Ätzen.

Das Satinierungsbad sollte man, um besonders gute Ergebnisse zu erzielen, während der Vorsatinierung der Folie bei einer Temperatur von etwa 90° C halten.

Die Erfindung bezieht sich auch auf Elektrolytkondensatoren mit Aluminiumfolien, welche nach dem oben geschilderten neuen Verfahren hergestellt sind und dadurch eine wesentlich verbesserte Oberflächenstruktur aufweisen.

Nachfolgend wird der Effekt der erfindungsgemäßen Vorsatinierung, welche eine Verbesserung der Gleichmäßigkeit der Oberflächenkapazität und eine Kapazitätserhöhung mit sich bringt, anhand von Beispielen erläutert.

### Beispiel 1:

### A: Effekt bei statischer Ätzung ohne Satinierungsbad:

- Elektrolyt: wässrige Lösung, 10%-ige Chloride enthaltend
- Ätzzeit: 160 Sekunden
- Gleichstrom: 0,6 A/cm²
- lmpulsform: rechteckig
- Frequenz: 40 Hz
- Arbeitszyklus (duty cycle): 90 %
- Rückstrom: 0,18 A/cm²
- Ätzzeit: 160 Sekunden = 90 C
- spezifische Kapazität bei 20V Formierungsspannung: 35µF/cm².

### B: Effekt bei statischer Ätzung mit Satinierungsbad:

Satinierungsbad: 10%-ige Chloride enthaltende wässrige Lösung
- Satinierungselektrizitätsmenge: 3 C/cm²
- Verwendung eines Satinierungsstroms mit Wellenform und einem Arbeitszyklus (duty cycle) von 50 %.
   Ätzbad: - wie bei A
- spezifische Kapazität bei 20V Formierungsspannung: 42 µF/cm².

Dies entspricht einer Kapazitätssteigerung von 20 %.

### Beispiel 2:

### A: Effekt bei dynamischer Ätzung ohne Satinierungsbad:

- Ätzung entsprechend dem in der DE-A-1 564 486 beschriebenen Ausführungsbeispiel mit einer Elektrizitätsmenge von 72 C.
- spezifische Kapazität bei 20V Formierungsspannung: 34µF/cm².

### B: Effekt bei dynamischer Ätzung mit Satinierungsbad:

- Kombination der Ätzung gemäß Ausführungsbeispiel der DE-A-1 564 486 und einer Vorsatinierung entsprechend Beispiel 1 mit einer Elektrizitätsmenge von 72 C.
- spezifische Kapazität bei 20V Formierungsspannung: 53µF/cm².

Dies entspricht einer Kapazitätssteigerung von fast 56 %.

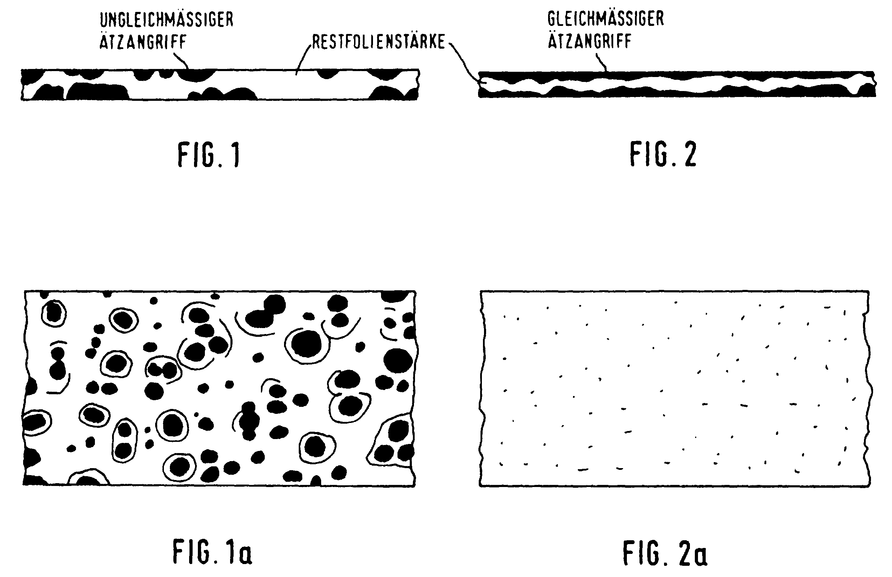

Die Vergleichmäßigung des Ätzangriffes ergibt sich aus der zeichnerisch dargestellten Schnittbildern und Oberflächenansichten, wobei Fig. 1 das Ergebnis des Beispiels 2A und Fig. 2 das Ergebnis des Beispiels 2B und Fig. 1a und 2a die zugehörigen Oberflächenansichten der Folien schematisch wiedergeben.

In beider Beispielen waren die jeweiligen Bedingungen der Hauptätzung dieselben, um den Effekt der Vorschaltung der Satinierungsstufe deutlich zu zeigen.

## Patentansprüche

1. Verfahren zur Herstellung einer Aluminiumfolie für Elektrolytkondensatoren durch anodisches Ätzen in einem einen Elektrolyten und eine Gegenelektrode enthaltenden Bad mit einer von Impulsen überlagerten Gleichspannung oder einem pulsierenden Gleichstrom, wobei vorzugsweise die Spannungsimpulse eine derartige Polarität und Größe haben, daß sie die Ätzung periodisch kurzzeitig unterbrechen, und anschließendes Formieren, dadurch gekennzeichnet, daß man im Durchlaufverfahren ätzt und die Folie vor dem Ätzen einer Vorätzung in einem als Chloridbad ausgebildeten Satinierungsbad mit einer geringen C-Zahl, von 3 bis 5 C/cm², unterwirft.

2. Verfahren nach Anspruch 1, dadurch gekennzeichnet, daß man die Folie in dem Satinierungsbad einem Satinierungsstrom (in Wellenform) mit einer Frequenz zwischen etwa 20 und 400 Hz und einem Arbeitszyklus (duty cycle) von mehr als 40 %, vorzugsweise von etwa 50 %, unterwirft.

3. Verfahren nach Anspruch 2, dadurch gekennzeichnet, daß man das Satinierungsbad bei einer Temperatur von etwa 90° C hält.

4. Elektrolytkondensator, dadurch gekennzeichnet, daß er eine Aluminiumfolie aufweist, welche nach einem der Ansprüche 1 bis 3 hergestellt ist.

## Claims

1. Method for the production of an aluminum foil for electrolytic capacitors by anodic etching in a bath containing an electrolyte and a counter-electrode with a direct current superimposed by current pulses, or a pulsating direct current, wherein the voltage pulses are preferably of such polarity and size, that they momentarily and periodically interrupt the etching, followed by subsequent activation, characterized in that the etching is done in a continuous process and that the foil is subjected to a pre-etching in a glazing bath being a chloride bath with a low C-value between 3 to 5 C/cm², prior to the etching.

2. Method according to claim 1, characterized in that in the glazing bath the foil is subjected to a glazing current (of wave shape) with a frequency of from about 20 to 400 Hz and a duty cycle of more than 40%, preferably of about 50%.

3. Method according to claim 2, characterized in that the glazing bath is maintained at a temperature of about 90°C.

4. Electrolytic capacitor, characterized in that it comprises an aluminum foil produced according to any of the claims 1 to 3.

## Revendications

1. Procédé de préparation de feuilles d'aluminium pour des condensateurs électrochimiques, par attaque anodique dans un bain contenant une électrolyte et une contre-électrode, avec une tension continue à impulsions superposées ou un courant continu à impulsions, les impulsions de tension présentant de préférence une polarité et une grandeur telles qu'elles peuvent interrompre l'attaque périodiquement pour une courte durée, l'attaque étant suivie d'un formage, caractérisé en ce qu'avant l'attaque les feuilles sont soumises à l'action d'une préattaque dans un bain à satiner, le bain à satiner étant un bain de chlorure ayant un faible indice de Cb, de 3 à 5 Cb/cm².

2. Procédé selon la revendication 1, caractérisé en ce que dans le bain à satiner les feuilles sont soumises à un courant à satiner (ondulatoire) ayant une fréquence comprise entre 20 et 400 Hz, et un cycle de travail ("duty cycle") supérieur à 40%, de préférence d'environ 50%.

3. Procédé selon la revendication 2, caractérisé en ce que le bain à maintenu à une température d'environ 90° C.

4. Condensateur électrochimique, caractérisé en ce qu'il comprend une feuille d'aluminium qui a été préparée selon l'une des revendications 1 à 3.
